(19) **Europäisches Patentamt / European Patent Office / Office européen des brevets**

(11) **EP 1 926 654 B1**

(12) **EUROPÄISCHE PATENTSCHRIFT**

(45) Veröffentlichungstag und Bekanntmachung des Hinweises auf die Patenterteilung:
**09.12.2009 Patentblatt 2009/50**

(21) Anmeldenummer: **06793568.4**

(22) Anmeldetag: **15.09.2006**

(51) Int Cl.:
**B62D 15/02** (2006.01)

(86) Internationale Anmeldenummer:
**PCT/EP2006/066422**

(87) Internationale Veröffentlichungsnummer:
**WO 2007/031578 (22.03.2007 Gazette 2007/12)**

(54) **VERFAHREN UND VORRICHTUNG ZUM LENKEN EINES KRAFTFAHRZEUGS**

METHOD AND DEVICE FOR STEERING A MOTOR VEHICLE

PROCEDE ET DISPOSITIF POUR CONDUIRE UN VEHICULE

(84) Benannte Vertragsstaaten:
**DE FR**

(30) Priorität: **15.09.2005 DE 102005044204**
**15.09.2005 DE 102005044199**
**15.09.2005 DE 102005044200**
**27.01.2006 DE 102006004174**
**21.07.2006 DE 102006034254**
**21.07.2006 DE 102006034255**
**02.08.2006 DE 102006036363**

(43) Veröffentlichungstag der Anmeldung:
**04.06.2008 Patentblatt 2008/23**

(73) Patentinhaber: **Continental Teves AG & Co. oHG**
**60488 Frankfurt (DE)**

(72) Erfinder:
• **ISERMANN, Rolf**
**64342 Seeheim (DE)**
• **SCHORN, Matthias**
**64367 Mühltal (DE)**
• **ARBITMANN, Maxim**
**61348 Bad Homburg (DE)**

(74) Vertreter: **Graf, Ulrich**
**Continental Teves AG & Co.oHG**
**Guerickestrasse 7**
**60488 Frankfurt am Main (DE)**

(56) Entgegenhaltungen:
DE-A1- 2 042 429    DE-A1- 3 830 747
DE-A1- 3 830 790    DE-A1- 10 312 513

EP 1 926 654 B1

**Beschreibung**

**Technisches Gebiet**

Die Erfindung betrifft ein Verfahren zum Lenken eines Kraftfahrzeugs bei einem Ausweichen vor einem Objekt im vorderen oder seitlichen Umfeld des Kraftfahrzeugs. Die Erfindung betrifft ferner eine Vorrichtung zum Lenken eines Kraftfahrzeugs bei einem Ausweichen vor einem Objekt im vorderen oder seitlichen Umfeld des Kraftfahrzeugs, die zur Durchführung des Verfahrens geeignet ist.

**Hintergrund und Stand der Technik**

DE 38 30 790 A1, als nächstliegender Stand der Technik betrachtet, zeigt ein Verfahren und eine entsprechende Vorrichtung zum Lenken eines Kraftfahrzeugs bei einem Ausweichen vor einem Objekt im vorderen Umfeld des Kraftfahrzeugs mit den folgenden Schritten:

- Berechnen einer Ausweichbahn für das Ausweichen vor dem Objekt,
- Ermitteln eines Lenkwinkels, und
- Beeinflussen eines Lenksystems des Kraftfahrzeugs nach Maßgabe des ermittelten Lenkwinkels.

Ein Ziel bei der Entwicklung von Kraftfahrzeugen sind Fahrerassistenzsysteme zur Unfallvermeidung. Diese Systeme überwachen das Umfeld des Fahrzeugs, entscheiden, ob es zu einer Kollision mit einem Objekt kommen kann, und greifen in das Lenksystem oder das Bremssystem des Fahrzeugs ein, um den Unfall durch ein Ausweichen oder Abbremsen zu vermeiden. Es hat sich dabei gezeigt, dass Ausweichmanöver insbesondere bei hohen Fahrzeuggeschwindigkeiten Vorteile gegenüber Notbremsungen haben. Zur Durchführung eines Ausweichmanövers wird bei einer drohenden Kollision üblicherweise eine Ausweichbahn für das Fahrzeug vorgegeben. Mittels eines Lenkungsaktuators, der eine fahrerunabhängige Einstellung eines Lenkwinkels erlaubt, wird das Fahrzeug dann derart gelenkt, dass es der Ausweichbahn folgt. Der Lenkungsaktuator wird durch einen Bahnfolgeregler angesteuert. Aufgrund des nichtlinearen querdynamischen Verhaltens des Fahrzeugs sind dabei relativ komplexe Bahnfolgeregler notwendig, so dass die Einstellung der Reglerparameter für einen bestimmten Fahrzeugtyp oftmals einen sehr hohen Aufwand erfordert.

**Darstellung der Erfindung**

Hiervon ausgehend ist es eine Aufgabe der vorliegenden Erfindung, eine Bahnfolgeregelung für das Durchführen eines automatischen Ausweichvorgangs bereitzustellen, die in möglichst einfacher Weise an verschiedene Fahrzeugtypen angepasst werden kann.

Erfindungsgemäß wird diese Aufgabe durch ein Verfahren mit den Merkmalen des Patentanspruchs 1 sowie durch eine Vorrichtung mit den Merkmalen des Patentanspruchs 13 gelöst.

Demgemäß ist es vorgesehen, ein Verfahren der eingangs genannten Art mit den folgenden Schritten durchzuführen:

- Berechnen einer Ausweichbahn für das Ausweichen vor dem Objekt,

- Ermitteln jeweils eines Reglerausgangssignals nach Maßgabe einer Abweichung zwischen einer Ist-Position des Kraftfahrzeugs und einer aufgrund der Ausweichbahn vorgegebenen Soll-Position in wenigstens zwei linearen Reglermodulen,

- Gewichten der Reglerausgangssignale mit jeweils einem in Abhängigkeit von der Fahrzeuggeschwindigkeit ermittelten Gewichtungsfaktor,

- Ermitteln eines Lenkwinkels lenkbarer Räder des Kraftfahrzeugs anhand einer Arbitrierung der gewichteten Reglerausgangssignale und

- Beeinflussen eines Lenksystems des Kraftfahrzeugs nach Maßgabe des ermittelten Lenkwinkels.

Ferner wird eine Vorrichtung der eingangs genannten Art geschaffen, die folgende Einrichtungen umfasst:

- eine Bahnplanungseinrichtung, mit der eine Ausweichbahn für das Ausweichen berechenbar ist,

- eine Regeleinrichtung die wenigstens zwei Reglermodule enthält, wobei in den Reglermodulen jeweils ein Reglerausgangssignal nach Maßgabe einer Abweichung zwischen einer Ist-Position des Kraftfahrzeugs und einer anhand der Ausweichbahn vorgegebenen Soll-Position ermittelbar ist,

- eine Gewichtungseinrichtung, mit der die Reglerausgangssignale jeweils mit einem in Abhängigkeit von einer Fahrzeuggeschwindigkeit ermittelten Gewichtungsfaktor gewichtet werden können,

- eine Arbitrierungseinrichtung, mit der anhand einer Arbitrierung der gewichteten Reglerausgangssignale ein Lenkwinkel lenkbarer Räder des Kraftfahrzeugs ermittelbar ist und

- eine Lenkungsaktuatorsteuerungseinrichtung, mit der ein Lenkungsaktuator nach Maßgabe des Lenkwinkels steuerbar ist, wobei ein Lenksystem des Kraftfahrzeugs mittels des Lenkungsaktuators beeinflussbar ist.

Mit Vorteil wird ein Lenkwinkel lenkbarer Räder des Kraftfahrzeugs anhand von linearen Reglermodulen ermittelt. Hierunter werden im üblichen Sinne Reglermodule verstanden, bei denen ein linearer Zusammenhang zwischen den Ausgangssignalen und den Eingangssignalen besteht. Die linearen Reglermodule sind aus linearen Übertragungsgliedern zusammengesetzt. Aufgrund des Einsatzes derartiger Reglermodule lassen sich die Regeleinheiten in sehr einfacher Weise parametrisieren und an bestimmte Fahrzeugtypen anpassen. Die Einstellung der Reglermodule ist wesentlich einfacher als es beispielsweise bei einer nichtlinearen oder adaptiven Regelung der Fall wäre. Es hat sich dabei allerdings gezeigt, dass eine Lenkwinkelregelung anhand eines einzelnen linearen Reglermoduls aufgrund des nichtlinearen Übertragungsverhaltens des Fahrzeugs nicht im gesamten Geschwindigkeitsbereich mit hinreichender Präzision durchgeführt werden kann. Daher werden mehrere lineare Reglermodule eingesetzt, deren Ausgangssignale mit einem geschwindigkeitsabhängigen Gewichtungsfaktor gewichtet werden. Zur Bestimmung des Lenkwinkels werden die gewichteten Ausgangssignale arbitriert. Somit können die einzelnen Reglermodule für eine Lenkwinkelregelung in einem bestimmten Geschwindigkeitsbereich optimiert werden. Durch die Gewichtung der Reglerausgangssignale kann erreicht werden, dass der maßgebliche Anteil des Lenkwinkels in einem bestimmten Geschwindigkeitsbereich durch das für diesen Bereich optimierte Reglermodul ermittelt wird, während die übrigen Reglermodule geringere oder gar keine Anteile beitragen.

In einer Ausführungsform des Verfahrens und der Vorrichtung ist es vorgesehen, dass die Reglerausgangssignale in Abhängigkeit von einer Abweichung zwischen einem anhand der berechneten Ausweichbahn vorgegebenen Soll-Querversatz und einem ermittelten Ist-Querversatz des Kraftfahrzeugs ermittelt werden.

Vorteilhaft wird in dieser Ausführungsform eine Regelung hinsichtlich der Querdynamik des Fahrzeugs vorgenommen. Unter dem Querversatz wird hier der laterale Versatz des Kraftfahrzeugs bei dem Ausweichmanöver ausgehend von dem Startpunkt des Ausweichmanövers verstanden.

Eine Weiterbildung des Verfahrens und der Vorrichtung sieht vor, dass die Reglerausgangssignale in Abhängigkeit von einer Abweichung zwischen einem anhand der berechneten Ausweichbahn für eine prädizierte Position des Fahrzeugs vorgegebenen Soll-Querversatz des Fahrzeugs und einem aktuellen Ist-Querversatz des Fahrzeugs ermittelt werden.

Vorteilhaft wird somit eine Abweichung zwischen dem aktuellen Ist-Querversatz des Fahrzeugs und einem Soll-Querversatz ermittelt, der für eine Position des Fahrzeugs vorgegeben ist, die dieses innerhalb einer kurzen Zeitspanne erreichen wird. Anhand einer derartigen vorausschauenden Regelung werden Zeitverzüge bei der Regelung vermieden, wodurch die Genauigkeit der Regelung erhöht wird.

Ferner ist es bei einer Weiterbildung des Verfahrens und der Vorrichtung vorgesehen, dass es sich bei der Abweichung um einen Versatz des Fahrzeugs orthogonal zu einer Mittellängsachse des Fahrzeugs handelt.

Vorteilhaft wird die Abweichung bei dieser Weiterbildung in einem fahrzeugfesten Bezugssystems betrachtet. Es hat sich gezeigt, dass die Genauigkeit der Regelung hierdurch weiter verbessert werden kann.

Eine Ausgestaltung des Verfahrens und der Vorrichtung beinhaltet, dass es sich bei den linearen Reglermodulen zumindest teilweise um Proportional-Differential-Regler handelt.

Durch den Einsatz derartiger Regler ist eine besonders einfache Parametrierung und Einstellung der einzelnen Reglermodule möglich.

Eine Weiterbildung des Verfahrens und der Vorrichtung sieht vor, dass die Reglermodule zumindest teilweise ein Proportionalglied und ein Vorhalteglied zur Verarbeitung der Positionsabweichung des Kraftfahrzeugs enthalten.

Durch den Einsatz eines Vorhaltegliedes wird dabei insbesondere eine Stabilisierung der Regelung erreicht.

Eine weitere Ausführungsform des Verfahrens und der Vorrichtung sieht vor, dass jedem Reglermodul eine Schwerpunktgeschwindigkeit zugeordnet wird und dass ein Gewichtungsfaktor nur in einem die Schwerpunktgeschwindigkeit enthaltenden Geschwindigkeitsintervall wesentlich von null verschieden ist.

Anhand der Schwerpunktgeschwindigkeit und des Geschwindigkeitsintervalls lassen sich vorteilhaft die Geschwindigkeitsbereiche angeben, in denen die einzelnen Reglermodule den Lenkwinkel jeweils maßgeblich bestimmen sollen.

Eine Ausgestaltung des Verfahrens und der Vorrichtung ist ferner **dadurch gekennzeichnet, dass** die Gewichtungsfaktoren die Form

$$\Phi_i = \frac{\mu_i(v)}{\sum_{j=1}^{N} \mu_j(v)} \quad \text{mit} \quad \mu_i(v) = \exp\left(-\frac{(v-c_i)^2}{2\sigma_i^2}\right)$$

aufweisen, wobei $c_i$ die Schwerpunktgeschwindigkeit, $\sigma_i$ einen vorgegebenen Parameter und $N$ die Anzahl der Reglermodule bezeichnet.

Vorteilhaft werden die Gewichtungsfaktoren hier anhand von Glockenkurven bestimmt, aus denen sich die den Reglermodulen zugeordneten Geschwindigkeitsbereiche ergeben.

Darüber hinaus beinhaltet eine Weiterbildung des Verfahrens und der Vorrichtung, dass aufgrund der Arbitrierung der gewichteten Reglerausgangssignale ein Regelanteil des Lenkwinkels ermittelt wird, und dass der Lenkwinkel zusätzlich einen Steueranteil enthält.

Die Vorsteuerung anhand des Steueranteils ermöglicht grundsätzlich ein zuverlässiges Lenken des Fahrzeugs ohne die bei einer Rückführung auftretenden Verzögerungen bei der Lenkwinkeleinstellung. Es treten allerdings aufgrund von Ungenauigkeiten bei der Vorsteuerung und von Störungen Abweichungen auf. Diese werden anhand des Regelanteils des Lenkwinkels ausgeregelt.

Bei einer Ausführungsform des Verfahrens und der Vorrichtung ist es vorgesehen, dass der Steueranteil des Lenkwinkels anhand eines inversen Einspurmodells des Kraftfahrzeugs ermittelt wird.

Der Vorteil des Einspurmodells liegt dabei insbesondere in seiner einfachen Handhabbarkeit, die insbesondere aufgrund der einfachen Parametrierung gegeben ist.

Eine Ausgestaltung des Verfahrens und der Vorrichtung sieht vor, dass der Steueranteil des Lenkwinkels durch

$$\delta_{MFF} = i_s\left(\frac{l}{R} + EG \cdot \frac{v^2}{R}\right)$$

gegeben ist, wobei $i_s$ ein Übersetzungsfaktor, $l$ ein Radstand des Kraftfahrzeugs, $EG$ ein Eigenlenkgradient des Kraftfahrzeugs, $v$ eine Geschwindigkeit des Fahrzeugs und $1/R$ eine Krümmung der Ausweichbahn ist.

Darüber hinaus wird ein Computerprogrammprodukt bereitgestellt, das einen Algorithmus definiert, der ein Verfahren der zuvor dargestellten Art umfasst.

Die Erfindung beinhaltet die Idee, ein Kraftfahrzeug bei einem Ausweichmanöver mithilfe linearer Regler zu lenken. Um dabei den Nichtlinearitäten im Verhalten des Kraftfahrzeugs Rechnung zu tragen, werden mehrere lineare Reglermodule eingesetzt, die jeweils für die Lenkwinkelregelung an einem Arbeitspunkt optimiert werden. Zur Bestimmung des Lenkwinkels werden die Ausgangssignale der Reglermodule gewichtet und arbitriert, wobei anhand der Gewichtung die Arbeitspunkte der Reglermodule berücksichtigt werden. Auf diese Weise wird der Lenkwinkel in einem bestimmten Geschwindigkeitsbereich maßgeblich von dem Reglermodul berechnet, das für diesen Geschwindigkeitsbereich optimiert ist.

Diese und andere Gesichtspunkte der Erfindung werden anhand der Ausführungsbeispiele weiter verdeutlicht und im Hinblick auf die Ausführungsbeispiele nachfolgend anhand der Figuren beschrieben.

**Kurze Beschreibung der Figuren**

Von den Figuren zeigt:

Fig. 1 eine schematische Darstellung eines Fahrzeugs mit einem Umfeldsensor zum Erfassen von Objekten im Umfeld des Fahrzeugs,

Fig. 2 ein schematisches Blockdiagramm eines Fahrer- assistenzsystems zum Durchführen eines Ausweichma- növers zum Vermeiden einer Kollision mit einem Ob- jekt,

Fig 3    eine schematische Darstellung einer Ausweichbahn und eines Koordinatensystems, in dem die Ausweich-bahn beschrieben werden kann,

Fig. 4    eine schematische Blockdarstellung eines Regel- kreises, der der Lenkwinkelregelung zugrunde liegt,

Fig. 5    eine ausschnittsweise schematische Blockdarstel- lung einer Regeleinheit mit mehreren Reglermodu- len,

Fig. 6    eine beispielhafte Darstellung zweier Funktionen, die zur Gewichtung der Ausgangssignale der Regler- module herangezogen werden und

Fig. 7    eine Darstellung der Funktionen, die in einer be- vorzugten Ausführungsform zur Gewichtung der Aus- gangssignale der Reglermodule herangezogen werden.

**Darstellung von Ausführungsbeispielen**

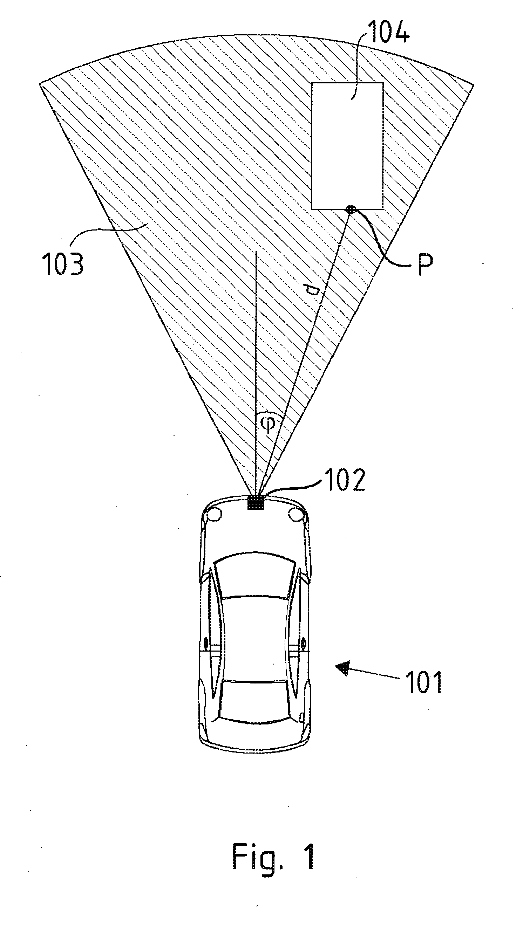

In Figur 1 ist ein Fahrzeug 101 dargestellt, das über einen Umfeldsensor 102 verfügt, mit dem Objekte im Umfeld des Fahrzeugs 101 erfasst werden können, bei denen es sich insbesondere um weitere Kraftfahrzeuge handelt, die sich in derselben oder einer benachbarten Fahrspur bewegen. Beispielhaft wird ein Umfeldsensor 102 mit einem Erfassungsbereich 103 gezeigt, der einen Raumwinkel vor dem Fahrzeug 101 umfasst, in dem beispielhaft ein Objekt 104 dargestellt ist. Bei dem Umfeldsensor 102 handelt sich vorzugsweise um einen LIDAR-Sensor (Light Detection and Ranging) der dem Fachmann an sich bekannt ist; gleichfalls sind jedoch auch anderen Umfeldsensoren einsetzbar. Der Sensor misst die Abstände d zu den erfassten Punkten eines Objekts 104 sowie die Winkel φ zwischen den Verbin-dungsgeraden zu diesen Punkten und der Mittellängsachse des Fahrzeugs 101, wie dies in Figur 1 beispielhaft für einen Punkt P des Objekts 104 veranschaulicht ist. Die dem Fahrzeug 101 zugewandten Fronten der erfassten Objekte 104 setzen sich aus mehreren erfassten Punkten zusammen, wobei eine Objekterkennungseinrichtung, zu der die Sensorsignale übermittelt werden, die Korrelationen zwischen Punkten und der Form eines Objekts 104 herstellt und einen Bezugspunkt für das Objekt 104 bestimmt. Als Bezugspunkt kann dabei beispielsweise der Mittelpunkt des Objekts 104 bzw. der Mittelpunkt der erfassten Punkte des Objekts 104 gewählt werden. Die Geschwindigkeiten der detektierten Punkte und damit die Geschwindigkeit der erfassten Objekte 104 können mittels des Umfeldsensors 102 nicht direkt gemessen werden. Sie werden aus der Differenz zwischen den in aufeinanderfolgenden Zeitschritten gemessenen Abständen in der taktweise arbeitenden Objekterkennungseinrichtung berechnet. In ähnlicher Weise kann grundsätzlich auch die Beschleunigung der Objekte 104 durch zweimaliges Ableiten ihrer Position bestimmt werden.

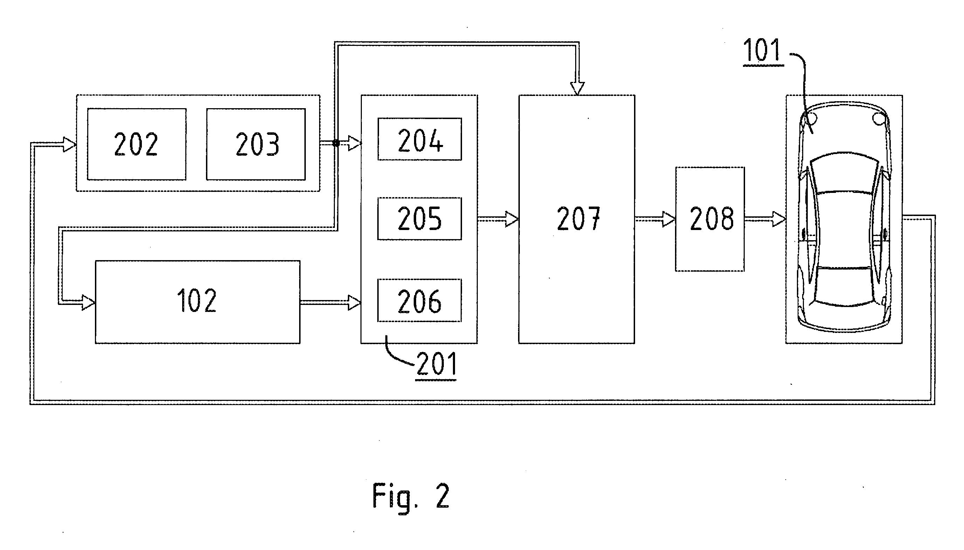

In Figur 2 ist anhand eines schematischen Blockdiagramms die Struktur eines Fahrerassistenzsystems zur Unfallvermeidung dargestellt. Die mittels des Umfeldsensors bestimmten Objektdaten werden in Form elektronischer Signale an den Block 201 des Systems übermittelt. Diesem werden zudem Bewegungsgrößen des Fahrzeugs 101 zugeführt, die mithilfe einer Fahrzeugsensorik 202 erfasst worden sind, oder in Block 203 anhand der Sensorsignale berechnet werden. Innerhalb des Blocks 201 wird in einer Prädiktionseinrichtung 204 anhand der Informationen über das Objekt 104 eine Objekttrajektorie bestimmt. Ferner wird anhand der erfassten und berechneten Bewegungsdaten des Fahrzeugs 101 eine Fahrzeugtrajektorie ermittelt. Insbesondere werden dabei die beispielsweise mithilfe von Raddrehzahlsensoren ermittelbare Fahrzeuggeschwindigkeit, der mittels eines Lenkwinkelsensors gemessene Lenkwinkel an den lenkbaren Rädern des Fahrzeugs 101, die Gierrate und/oder die Querbeschleunigung des Fahrzeugs 101, die mittels entsprechender Sensoren gemessen werden, zur Berechnung der Fahrzeugtrajektorie herangezogen. Dann wird in einer Entscheidungseinrichtung 205 überprüft, ob sich das Kraftfahrzeug 101 auf einem Kollisionskurs mit einem der erfassten Objekte 104 befindet. Falls ein derartiger Kollisionskurs festgestellt wird und die sogenannte Kollisionszeit (TTC, Time To Collision), d.h. die Zeitdauer bis zu der ermittelten Kollision mit dem Objekt 104, einen bestimmten Wert unterschreitet, wird ein Auslösesignal an eine Bahnplanungseinrichtung 206 übermittelt. Das Auslösesignal führt dazu, dass zunächst innerhalb der Bahnplanungseinrichtung 206 eine Ausweichbahn in der Form einer ebenen Kurve mit der Darstellung $y_R = f(x)$ berechnet wird. Dann wird aufgrund der ermittelten Ausweichbahn ein Startpunkt für das Ausweichmanöver bestimmt, an dem das Ausweichmanöver gestartet werden muss, um dem Objekt 104 gerade noch ausweichen zu können. Diese Schritte werden vorzugsweise in Zeitschritten wiederholt, bis keine Kollisionsgefahr aufgrund von Kursänderungen des Objekts 104 oder des Fahrzeugs 101 mehr besteht oder bis das Fahrzeug 101 den Startpunkt für ein Ausweichmanöver erreicht. Ist dies der Fall, wird die Ausweichbahn oder die Bahn repräsentierende Parameter an eine Regelungseinrichtung 207 übermittelt. Diese ermittelt als Stellgröße einen Lenkwinkel, nach dessen Maßgabe ein Lenkungsaktuator des Fahrzeugs 101 durch eine Lenkungsaktuatorsteuerungseinrichtung 208 angesteuert wird. Bei dem Lenkungsaktuator handelt es sich um eine Lenkwinkelstelleinheit, mit der an den lenkbaren Rädern des Kraftfahrzeugs 101 Lenkwinkel eingestellt werden können, die das Kraftfahrzeug 101 der Ausweichbahn folgen lassen. Die Lenkwinkelstelleinheit ist beispielsweise als eine an sich bekannte Überlagerungslenkung ausgeführt, mit dem fahrerunabhängig ein Lenkwinkel an den Vorderrädern des Kraftfahrzeugs 101 eingestellt werden kann.

Die Ausweichbahn kann in vielfältiger Weise vorgegeben werden. Ein Beispiel ist eine Bahnvorgabe in Form eines Polynoms oder in Form aneinandergesetzter Klothoidbögen. Als besonders vorteilhaft hat sich eine Bahnvorgabe in Form einer Sigmoide herausgestellt die durch

$$y_R = f(x) = \frac{B}{1 + \exp(-a(x-c))}$$

gegeben ist. Die Parameter $B$, $a$ und $c$ werden entsprechend der Fahrsituation bestimmt. Der Parameter $B$ entspricht dabei der Manöverbreite des Ausweichmanövers, d.h. dem gewünschten lateralen Versatz des Fahrzeugs 101. Für den Parameter c gilt beispielsweise

$$c = \pm \frac{1}{a} \ln\left(\frac{D}{y_{tol}} - 1\right)$$

wobei $y_{tol}$ ein vorgegebener kleiner Toleranzwert ist, der eingeführt wird, weil die Kurve $y_R = f(x)$ nicht durch den Ursprung des Koordinatensystems verläuft. Das positive Vorzeichen wird bei der Wahl des im Folgenden beschriebenen Koordinatensystems bei einem Ausweichen nach links und das negative Vorzeichen bei einem Ausweichen nach rechts gewählt. Der Parameter $a$ bestimmt die Steigung der Sigmoide und kann in Abhängigkeit von der Fahrzeuggeschwindigkeit beispielsweise so gewählt werden, dass die bei dem Ausweichmanöver auftretende Querbeschleunigung des Fahrzeugs 101 und/oder die Änderungsrate der Querbeschleunigung vorgegebene Maximalwerte nicht überschreiten.

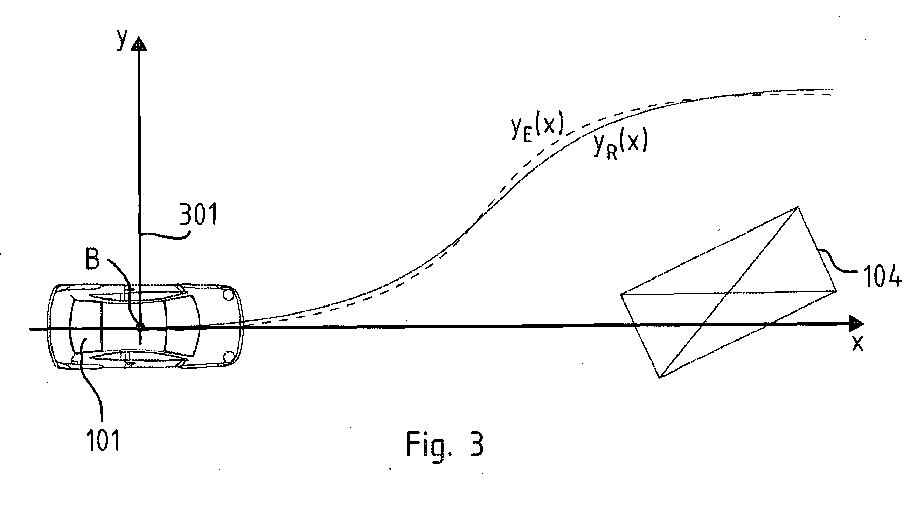

In Figur 3 sind beispielhaft eine vorgegebene Bahn $y_R(x)$ (durchgezogene Linie) und eine tatsächliche Bahn $y_E(x)$ (gestrichelte Linie) bei einem Ausweichen vor einem Objekt 104 dargestellt. Ferner ist ein vorteilhaftes ortsfestes Koordinatensystem 301 zur Angabe der Ausweichbahn dargestellt. Die Lage des Ursprungs des Koordinatensystems 301 entspricht im Wesentlichen der Lage eines vorgegebenen Bezugspunktes B des Fahrzeugs 101 zu Beginn des Ausweichmanövers und wird für die Dauer des Ausweichmanövers fixiert. Die positive x-Achse des Koordinatensystems 301 zeigt in die am Startpunkt des Ausweichmanövers vorliegende Fahrzeuglängsrichtung und die positive y-Achse in Bezug auf diese Richtung nach links. Eine geringe Abweichung zwischen der Position des Bezugspunktes B zu Beginn des Ausweichmanövers und dem Ursprung des Koordinatensystems kann sich bei der zuvor dargestellten Ausweichbahn aufgrund der Toleranz $y_{tol}$ ergeben. Es können gleichfalls andere ortsfeste Koordinatensysteme verwendet werden. Der vorgegebene Querversatz $y_R(x)$, der vorliegende Querversatz $y_E(x)$ sowie die Wegstrecke $x$ werden für den Bezugspunkt B des Fahrzeugs 101 angegeben.

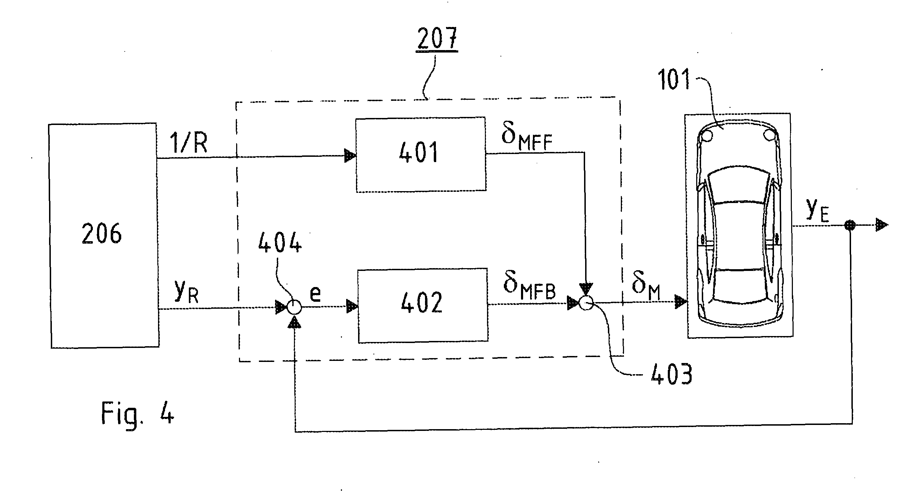

Der Regelungskreis der Bahnfolgeregelung sowie die Struktur der Regeleinheit 207 sind in Figur 4 in schematischer Darstellung gezeigt. Wie in der Figur dargestellt, umfasst die Regeleinheit 207 einen Vorsteuerblock 401 und einen Regelungsblock 402. In den Vorsteuerblock 401 wird anhand eines inversen Bewegungsmodells für das Fahrzeug 101 ein Steueranteil $\delta_{MFF}$ des mittels des Lenkungsaktuators einzustellenden Lenkwinkels $\delta_M$ bestimmt. Vorzugsweise wird hierbei ein stationäres Einspurmodell zugrunde gelegt. Der in dem Vorsteuerblock 401 ermittelte Lenkwinkel entspricht dabei dem Lenkwinkel der für eine Kreisfahrt auf einem gegebenen Kreis mit dem Radius $R$ einzustellen ist. Es gilt daher:

$$\delta_{MFF}(t) = i_s \cdot \left(\frac{l}{R(t)} + EG \cdot \frac{v^2(t)}{R(t)}\right) \tag{1}$$

Hierbei bezeichnet $1/R(t)$ die Krümmung der vorgegebenen Ausweichbahn zum Zeitpunkt $t$, $v(t)$ die Fahrzeuggeschwindigkeit zum Zeitpunkt $t$, $l$ den Radstand des Fahrzeugs 101 und $EG$ den so genannten Eigenlenkgradienten des Fahrzeugs 101. Die Größe $i_s$ ist der Übersetzungsfaktor zwischen dem Lenkwinkel bezogen auf die von dem Fahrer bediente Lenkhandhabe und dem Lenkwinkel bezogen auf die lenkbaren Räder des Fahrzeugs 101. Durch den Übersetzungsfaktor wird berücksichtigt, dass die Stellgröße zur Ansteuerung des Lenkungsaktuators üblicherweise einem auf die Lenkhandhabe bezogenen Lenkwinkel entspricht. Zur Durchführung der Bahnregelung werden in jedem Zeitschritt der getaktet arbeitenden Regeleinheit 207 die x- und y-Koordinaten $x_E(t)$ und $y_E(t)$ der Ist-Positionen des Fahrzeugs 101 bzw. seines Bezugspunktes B innerhalb des Koordinatensystems 301 bestimmt. Dies erfolgt beispielsweise sukzessive ausgehend von dem Startpunkt des Ausweichmanövers anhand der von dem Startpunkt aus zurückgelegten Wegstrecke, die anhand von Längs- und Quergeschwindigkeit des Fahrzeugs 101 ermittelbar ist, sowie anhand des Gierwinkels und des Fahrzeugs 101, der aufgrund einer Integration der mittels eines Gierratensensors erfassten Gierrate des Fahrzeugs 101 feststellbar ist. Die Krümmung der Ausweichbahn zum Zeitpunkt $t$ entspricht dem Radius der Ausweichbahn in dem Punkt $(x_E(t), y_R(x_E(t)))$. Der inverse Radius wird auch als Krümmung der Bahn in dem betreffenden Punkt bezeichnet. Die Fahrzeuggeschwindigkeit wird beispielsweise anhand der Signale der Raddrehzahlsensoren ermittelt. Bei dem Radstand und dem Eigenlenkgradienten handelt es sich um im Wesentlichen unveränderliche Parameter des Fahrzeugs 101, die in einem Speicher des Fahrerassistenzsystems abgelegt werden können. Der Eigenlenkgradient ist dabei gegeben durch

$$EG = m \cdot \frac{c_{\alpha R} l_R - c_{\alpha F} l_F}{c_{\alpha R} c_{\alpha F} l} \qquad (2)$$

Die zusätzlich eingeführten Größen bedeuten hier:

$c_{\alpha F}$    Schräglaufsteifigkeit der Vorderräder
$c_{\alpha R}$    Schräglaufsteifigkeit der Hinterräder
$l_F$    Abstand der Vorderachse vom Fahrzeugschwerpunkt
$l_R$    Abstand der Hinterachse vom Fahrzeugschwerpunkt
$m$    Masse des Fahrzeugs

Der nach Gleichung (1) bestimmte Steueranteil des Lenkwinkels wird an der Summationsstelle 403 mit einem Regelanteil $\delta_{MFB}$ des Lenkwinkels kombiniert. Dies erfolgt durch eine Summenbildung, so dass für den einzustellenden Lenkwinkel gilt:

$$\delta_M = \delta_{MFF} + \delta_{MFB} \qquad (3)$$

Der Regelungsanteil des Lenkwinkels wird in dem Regelungsblock 402 anhand der Regelabweichung $e$ zwischen dem Soll-Querversatz $y_R(t)$ zum Zeitpunkt $t$ und dem ermittelten Ist-Querversatz $y_E(t)$ des Fahrzeugs 101 bzw. seines Bezugspunktes ermittelt. Die Regelabweichung wird an der Subtraktionsstelle 404 zu

$$e(t) = y_R(t) - y_E(t) \qquad (4)$$

bestimmt. Der Soll-Querversatz entspricht dabei dem Querversatz $y_R(t)$, der durch die Ausweichbahn vorgegeben ist. Anhand des Regelungsanteils des Lenkwinkels werden Störungen und Abweichungen ausgeglichen, die bei der Vorsteuerung nicht berücksichtigt werden. In einer Ausführungsform wird eine vorausschauende Regelung durchgeführt. Hierfür wird in dem Beobachtungszeitpunkt $t$ die Soll-Position $(x_R(t+\Delta t), y_R(t+\Delta t))$ des Fahrzeugs 101 vorausberechnet, die das Fahrzeug nach einem kurzen Vorausschauzeitraum $\Delta t$ von beispielsweise 200 ms aufgrund der vorgegebenen Bahn einnehmen soll. Dabei wird anhand der aktuellen Längs- und Quergeschwindigkeit des Fahrzeugs die x-Koordinaten des Bezugspunktes des Fahrzeugs für den Zeitpunkt $t+\Delta t$ prädiziert und der zugehörige Soll-Querversatz $y_R(t+\Delta t)$ bestimmt. Dieser Soll-Querversatz wird mit dem Ist-Querversatz $y_E(t)$ des Fahrzeugs 101 im Beobachtungszeitpunkt $t$ verglichen, um die Regelabweichung $e$ zu ermitteln. Die Regelabweichung e ergibt sich in dieser Ausführungsform somit als Abweichung zwischen dem aktuellen Querversatz $y_E(t)$ und dem für eine prädizierte Position des Fahrzeugs 101 vorgegebenen Soll-Querversatz $y_R(t+\Delta t)$. Es hat sich zudem gezeigt, dass die Genauigkeit der Regelung dadurch weiter verbessert werden kann, dass die Regelabweichung e bzw. der Ist-Querversatz des Fahrzeugs 101 sowie der vorausberechnete Soll-Querversatz in ein Fahrzeugkoordinatensystem transformiert werden. Dabei handelt es sich um ein Bezugssystem, dessen Ursprung mit der Position des Fahrzeugs 101 in dem Beobachtungszeitpunkt $t$ zusammenfällt. Die positive x-Achse des Fahrzeugkoordinatensystems zeigt in Fahrzeuglängsrichtung nach vorne und die y-Achse nach links in Bezug diese Richtung. Unter Verwendung des Fahrzeugkoordinatensystems handelt es sich bei der Regelabweichung $e$ um einen Versatz orthogonal zur Fahrzeuglängsrichtung.

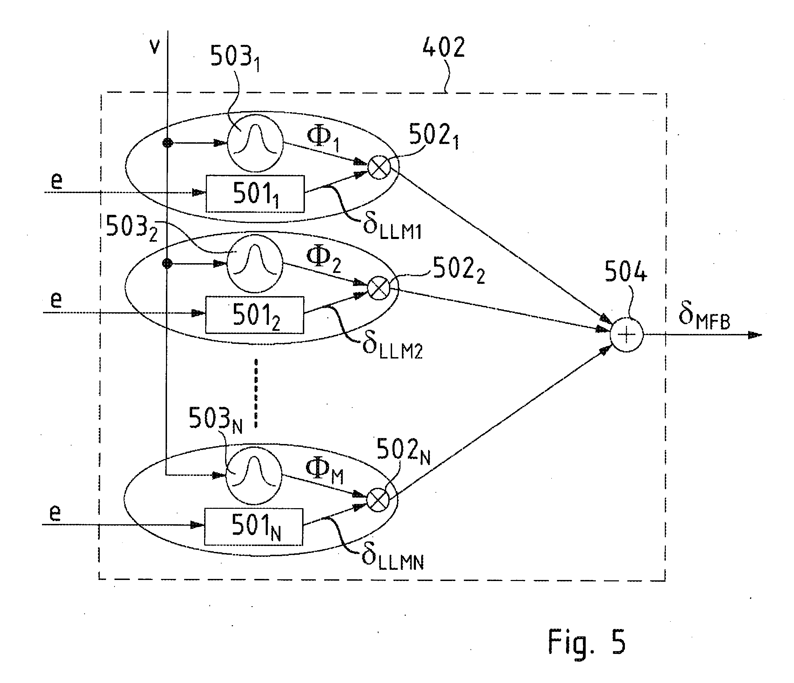

Der Regelungsanteil des Lenkwinkels wird anhand einer linearen Regelung ermittelt. Hierdurch wird eine besonders einfache Anpassung der Regelung an einen bestimmten Fahrzeugtyp ermöglicht. Allerdings hat die Fahrzeuggeschwindigkeit einen sehr großen Einfluss auf das Fahrzeugverhalten. Mittels eines einzigen linearen Reglers kann die Kompensationsregelung daher nicht in dem gesamten möglichen Geschwindigkeitsbereich mit der erforderlichen Genauigkeit durchgeführt werden. Der lineare Regler kann vielmehr nur in einem begrenzten Geschwindigkeitsbereich in der Nähe eines Arbeitspunktes eingesetzt werden. Um die Regelung innerhalb des gesamten Geschwindigkeitsbereichs vornehmen zu können, ist es vorgesehen, mehrere lineare Regler für jeweils einen Arbeitspunkt bereitzustellen und die Ausgangssignale dieser Regler zu superponieren. Der Regelungsblock 402 hat daher eine Struktur, die schematisch in Figur 5 dargestellt ist.

In Figur 5 ist beispielhaft ein Regelungsblock 402 dargestellt, der N Reglermodule $501_1,...,501_N$ enthält. Jedes Reglermodul $501_1,...,501_N$ erzeugt ein Ausgangssignal $\delta_{LLMi}$ ($i=1,...,N$), das an einer Multiplikationsstelle $502_i$ mit einem Gewichtungsfaktor $\Phi_i$ gewichtet wird. Der Gewichtungsfaktor wird in einem Block $503_i$ anhand einer dem Reglermodul $501_i$ zugeordneten Aktivierungsfunktion $\Phi_i(v)$ in Abhängigkeit von der Fahrzeuggeschwindigkeit ermittelt. Das gewichtete Ausgangsignal eines Regelmoduls $501_i$ ist damit durch

$$\Phi_i(v) \cdot \delta_{LLMi} \qquad (5)$$

gegeben. An der Additionsstelle 504 wird aus den N gewichteten Ausgangssignalen der Regelanteil $\delta_{MFB}$ des einzustellenden Lenkwinkels ermittelt. Für diesen gilt:

$$\delta_{MFB} = \sum_{i=1}^{N} \Phi_i(v) \cdot \delta_{LLMi} \qquad (6)$$

Die Reglermodule $501_1,...,501_N$ sind vorzugsweise als Proportional-Differenzial-Regler (PD-Regler) ausgeführt. Ein Reglermodul $501_i$ weist daher die Übertragungsfunktion

$$G_{PDi}(s) = K_{Pi} + K_{Di} \cdot s \qquad (7)$$

auf, wobei $K_{Pi}$ und $K_{Di}$ Reglerparameter sind'. In einem Reglermodul $501_i$ wird daher das Ausgangssignal nach folgendem Regelgesetz bestimmt:

$$\delta_{LLMi}(t) = K_{Pi} \cdot e(t) + K_{Di} \cdot \frac{de(t)}{dt} \qquad (8)$$

In einer weiteren Ausführungsform wird der differentielle Anteil (D-Ariteil) des Ausgangssignals des Reglermoduls $501_i$ durch ein Vorhalteglied ($DT_1$-Glied) mit der Übertragungsfunktion

$$G_i(s) = \frac{K_{Di} \cdot T_{D1} \cdot s}{1 + T_{D2} \cdot s} \qquad (9)$$

bestimmt. Die Reglermodule arbeiten in der Regel getaktet, so dass das $DT_1$-Glied sowie das D-Glied in der zuvor genannten Ausführungsform zeitdiskret ausgeführt sind.

Die den Reglermodulen $501_1,...,501_N$ zugeordneten Aktivierungsfunktionen $\Phi_1,...,\Phi_N$ sind nur in einem begrenzten Geschwindigkeitsbereich um eine Schwerpunktgeschwindigkeit wesentlich verschieden von null. In einer Ausführungsform handelt es sich bei den Aktivierungsfunktionen um Gaußfunktionen der Form

$$\Phi_i(v) = \frac{\mu_i(v)}{\sum_{j=1}^{N} \mu_j(v)} \quad \text{mit} \quad \mu_i(v) = \exp\left(-\frac{(v-c_i)^2}{2\sigma_i^2}\right) \quad\quad (10)$$

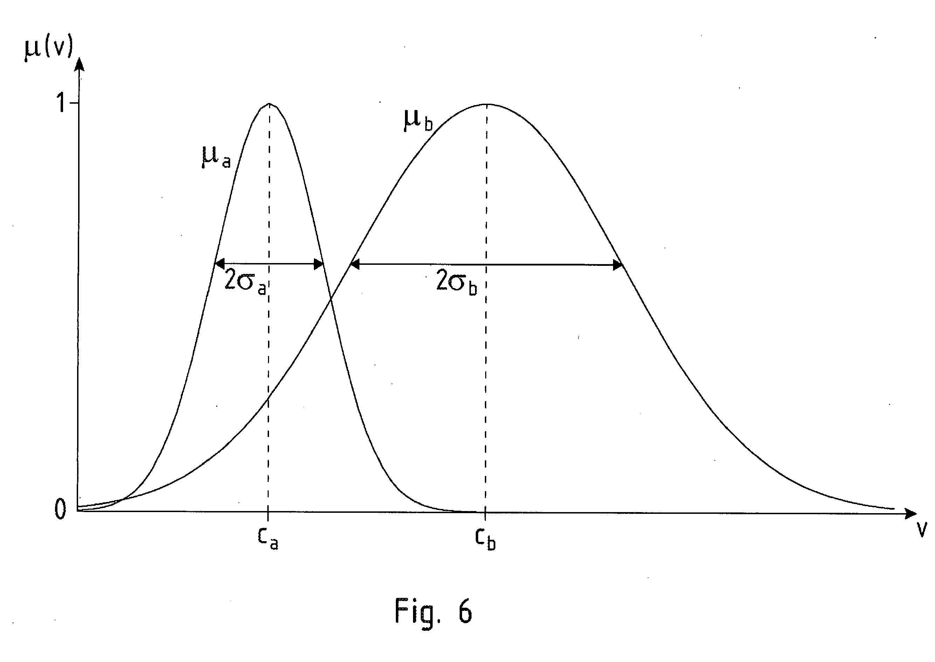

Die Gaußfunktionen $\mu_i$ sind Glockenkurven, die symmetrisch um ihr Maximum bei $v=c_i$ sind. Der Parameter $\sigma_i$ bestimmt die Breite der Glockenkurve. In Figur 6 sind beispielhaft zwei derartige Funktionen $\mu_a$ und $\mu_b$ mit Parametern $c_a$ und $\sigma_a$ bzw. $c_b$ und $\sigma_b$ dargestellt.

Anhand der Funktion $\mu_i(v)$ bzw. der Aktivierungsfunktionen $\Phi_i(v)$ wird der Geschwindigkeitsbereich angegeben, in dem der Regelanteil des Lenkwinkels maßgeblich durch das Reglermodul $501_i$ bestimmt wird. Die von den übrigen Reglermodulen beigetragenen Anteile sind demgegenüber geringer. Die Verteilung der Schwerpunktgeschwindigkeiten orientiert sich vorzugsweise an der reziproken Fahrzeuggeschwindigkeit, da diese aufgrund ihres häufigen Auftretens in den Gleichungen des Einspurmodells einen sehr großen Einfluss auf das Fahrzeugverhalten hat. Im Bereich geringerer Geschwindigkeiten ändert sich die reziproke Fahrzeuggeschwindigkeit relativ stark, so dass in diesem Bereich mehr Reglermodule $501_1,...,501_N$ eingesetzt werden müssen und die Schwerpunktgeschwindigkeiten mit einer höheren Dichte verteilt sind als bei höheren Geschwindigkeiten. Die Breite der Funktion $\mu_i$ ist dementsprechend bei den Reglermodulen $501_1,...,501_N$, die für die Bereiche geringerer Geschwindigkeit vorgesehen sind, geringer als bei den Reglermodulen $501_1,...,501_N$, die für die Bereiche höherer Geschwindigkeiten vorgesehen sind.

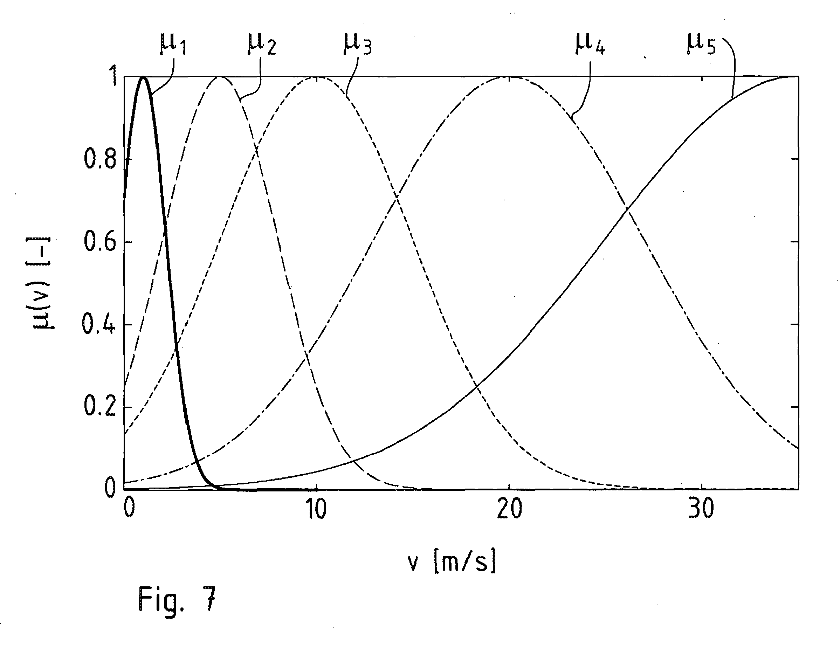

Beispielsweise können wenigstens fünf Reglermodulen $501_1,...,501_5$ eingesetzt werden, denen Schwerpunktgeschwindigkeiten $c_1,...,c_5$ von etwa 1 m/s, 5 m/s, 10 m/s, 20 m/s und 35 m/s zugeordnet werden. Die zugehörigen Funktionen $\mu_1,...,\mu_5$ sind beispielhaft in Figur 7 dargestellt. Grundsätzlich können jedoch auch Reglermodulen $501_1,...,501_N$ mit anderen Schwerpunktgeschwindigkeiten und in anderer Anzahl eingesetzt werden. Mit steigender Anzahl der Reglermodule $501_1,...,501_N$ erhöht sich dabei die Genauigkeit der Regelung. Allerdings wird gleichfalls mit steigender Anzahl der Reglermodule $501_1,...,501_N$ auch der Aufwand für die Einstellung der Regeleinheit 107 erhöht.

Die Einstellung der Reglermodule $501_1,...,501_N$ auf einen bestimmten Fahrzeugtyp erfolgt anhand einer Bestimmung der zugehörigen Reglerparameter $K_{P1},...,K_{PN}$, $K_{D1},...,K_{DN}$ und gegebenenfalls $T_{D1},...,T_{DN}$. Die genaue Abstimmung eines Reglers $501_i$ kann dabei in einfacher Weise durch eine Auswertung von Testfahrten vorgenommen werden, die bei der Schwerpunktgeschwindigkeit $c_i$ des Reglermoduls $501_i$ durchgeführt werden. Da die linearen Reglermodule dabei relativ einfach zu handhaben sind, kann auf diese Weise eine einfache und schnelle Anpassung der Regeleinheit 207 an einen bestimmten Fahrzeugtyp vorgenommen werden.

**Patentansprüche**

1. Verfahren zum Lenken eines Kraftfahrzeugs bei einem Ausweichen vor einem Objekt im vorderen oder seitlichen Umfeld des Kraftfahrzeugs mit den folgenden Schritten:

   - Berechnen einer Ausweichbahn für das Ausweichen vor dem Objekt (104),
   - Ermitteln jeweils eines Reglerausgangssignals ($\delta_{LLM1}$; ...; $\delta_{LLMN}$) nach Maßgabe einer Abweichung (e) zwischen einer Ist-Position des Kraftfahrzeugs (101) und einer aufgrund der Ausweichbahn vorgegebenen Soll-Position in wenigstens zwei linearen Reglermodulen ($501_1$; ...; $501_N$),
   - Gewichten der Reglerausgangssignale ($\delta_{LLM1}$; ...; $\delta_{LLMN}$) mit jeweils einem in Abhängigkeit von der Fahrzeuggeschwindigkeit (v) ermittelten Gewichtungsfaktor ($\Phi_1$; ...; $\Phi_N$),
   - Ermitteln eines Lenkwinkels ($\delta_M$; $\delta_{MFB}$) lenkbarer Räder des Kraftfahrzeugs anhand einer Arbitrierung der gewichteten Reglerausgangssignale und
   - Beeinflussen eines Lenksystems des Kraftfahrzeugs (101) nach Maßgabe des ermittelten Lenkwinkels ($\delta_M$; $\delta_{MFB}$).

2. Verfahren nach Anspruch 1,
   **dadurch gekennzeichnet,**
   **dass** die Reglerausgangssignale ($\delta_{LLM1}$; ...; $\delta_{LLMN}$) in Abhängigkeit von einer Abweichung (e) zwischen einem anhand der berechneten Ausweichbahn vorgegebenen Soll-Querversatz ($y_R$) und einem ermittelten Ist-Querversatz ($y_E$) des Kraftfahrzeugs (101) ermittelt werden.

3. Verfahren nach Anspruch 1 oder 2,
   **dadurch gekennzeichnet,**

**dass** die Reglerausgangssignale ($\delta_{LLM1}$; ...; $\delta_{LLMN}$) in Abhängigkeit von einer Abweichung zwischen einem anhand der berechneten Ausweichbahn für eine prädizierte Position des Fahrzeugs (101) vorgegebenen Soll-Querversatz ($y_R(t+\Delta t)$) des Fahrzeugs (101) und einem aktuellen Ist-Querversatz ($y_E(t)$) des Fahrzeugs (101) ermittelt werden.

4.  Verfahren nach Anspruch einem der vorangegangenen Ansprüche,
    **dadurch gekennzeichnet,**
    **dass** es sich bei der Abweichung (*e*) um einen Versatz des Fahrzeugs (101) orthogonal zu einer Mittellängsachse des Fahrzeugs (101) handelt.

5.  Verfahren nach einem der vorangegangenen Ansprüche,
    **dadurch gekennzeichnet,**
    **dass** es sich bei den linearen Reglermodulen ($501_1$; ...; $501_N$) zumindest teilweise um Proportional-Differential-Regler handelt.

6.  Verfahren nach einem der vorangegangenen Ansprüche,
    **dadurch gekennzeichnet,**
    **dass** die Reglermodule ($501_1$; ...; $501_N$) zumindest teilweise ein Proportionalglied und ein Vorhalteglied zur Verarbeitung der Positionsabweichung des Kraftfahrzeugs (101) enthalten.

7.  Verfahren nach einem der vorangegangenen Ansprüche,
    **dadurch gekennzeichnet,**
    **dass** jedem Reglermodul ($501_1$; ...; $501_N$) eine Schwerpunktgeschwindigkeit ($c_1$; ...; $c_N$) zugeordnet wird und dass ein Gewichtungsfaktor ($\Phi_1$; ...; $\Phi_N$) nur in einem die Schwerpunktgeschwindigkeit ($c_1$; ...; $c_N$) enthaltenden Geschwindigkeitsintervall wesentlich von Null verschieden ist.

8.  Verfahren nach einem der vorangegangenen Ansprüche,
    **dadurch gekennzeichnet,**
    **dass** die Gewichtungsfaktoren ($\Phi_1$; ...; $\Phi_N$) die Form

$$\Phi_i = \frac{\mu_i(v)}{\displaystyle\sum_{j=1}^{N} \mu_j(v)} \quad \mathtt{mit} \quad \mu_i(v) = \exp\left(-\frac{(v-c_i)^2}{2\sigma_i^2}\right)$$

aufweisen, wobei $c_i$ die Schwerpunktgeschwindigkeit, $\sigma_i$ einen vorgegebenen Parameter und *N* die Anzahl der Reglermodule bezeichnet.

9.  Verfahren nach einem der vorangegangenen Ansprüche,
    **dadurch gekennzeichnet,**
    **dass** aufgrund der Arbitrierung der gewichteten Reglerausgangssignale ein Regelanteil ($\delta_{MFB}$) des Lenkwinkels ($\delta_M$) ermittelt wird, und dass der Lenkwinkel ($\delta_M$) zusätzlich einen Steueranteil ($\delta_{MFF}$) enthält.

10. Verfahren nach einem der vorangegangenen Ansprüche,
    **dadurch gekennzeichnet,**
    **dass** der Steueranteil ($\delta_{MFF}$) des Lenkwinkels ($\delta_M$) anhand eines inversen Einspurmodells des Kraftfahrzeugs (101) ermittelt wird.

11. Verfahren nach einem der vorangegangenen Ansprüche,
    **dadurch gekennzeichnet,**
    **dass** der Steueranteil ($\delta_{MFF}$) des Lenkwinkels ($\delta_M$) durch

$$\delta_{MFF} = i_s\left(\frac{l}{R} + EG \cdot \frac{v^2}{R}\right)$$

gegeben ist, wobei $i_s$ Übersetzungsfaktor, $l$ ein Radstand des Kraftfahrzeugs, $EG$ ein Eigenlenkgradient des Kraftfahrzeugs, $v$ eine Geschwindigkeit des Kraftfahrzeugs (101) und $1/R$ eine Krümmung der Ausweichbahn ist.

12. Computerprogrammprodukt,
   **dadurch gekennzeichnet,**
   **dass** es einen Algorithmus definiert, der ein Verfahren nach einem der vorangegangenen Ansprüche umfasst.

13. Vorrichtung zum Lenken eines Kraftfahrzeugs bei einem Ausweichen vor einem Objekt im vorderen oder seitlichen Umfeld des Kraftfahrzeugs umfassend:

   - eine Bahnplanungseinrichtung (206), mit der eine Ausweichbahn für das Ausweichen berechenbar ist,
   - eine Regeleinrichtung (207; 402), die wenigstens zwei Reglermodule ($501_1$; ...; $501_N$) enthält, wobei in den Reglermodulen ($501_1$; ...; $501_N$) jeweils ein Reglerausgangssignal ($\delta_{LLM1}$; ...; $\delta_{LLMN}$) nach Maßgabe einer Abweichung (e) zwischen einer Ist-Position des Kraftfahrzeugs (101) und einer anhand der Ausweichbahn vorgegebenen Soll-Position ermittelbar ist,
   - eine Gewichtungseinrichtung ($502_1$, $503_1$; ...; $502_N$, $503_N$) mit der die Reglerausgangssignale ($\delta_{LLM1}$; ...; $\delta_{LLMN}$) jeweils mit einem in Abhängigkeit von einer Fahrzeuggeschwindigkeit (v) ermittelten Gewichtungsfaktor ($\Phi_1$; ...; $\Phi_N$) gewichtet werden können,
   - eine Arbitrierungseinrichtung (504), mit der anhand einer Arbitrierung der gewichteten Reglerausgangssignale ein Lenkwinkel ($\delta_M$; $\delta_{MFB}$) lenkbarer Räder des Kraftfahrzeugs (101) ermittelbar ist und
   - eine Lenkungsaktuatorsteuerungseinrichtung (208), mit der ein Lenkungsaktuator nach Maßgabe des Lenkwinkels ($\delta_M$; $\delta_{MFB}$) steuerbar ist, wobei ein Lenksystem des Kraftfahrzeugs (101) mittels des Lenkungsaktuators beeinflussbar ist.

**Claims**

1. Method for steering a motor vehicle when swerving to avoid hitting an object in the vicinity of (in front of or to the side of) the motor vehicle with the following steps:

   - calculating a swerving path for swerving to avoid hitting the object (104);
   - determining one closed-loop-controller output signal each ($\delta_{LLM1}$; ...; $\delta_{LLMN}$) according to a deviation (e) of an actual position of the motor vehicle (101) from a desired position in at least two linear closed-loop controller modules ($501_1$; ...; $501_N$), said desired position being preset on account of the swerving path;
   - weighting the closed-loop-controller output signals ($\delta_{LLM1}$; ...; $\delta_{LLMN}$) with one weighting factor each ($\Phi_1$; ...; $\Phi_N$) said weighting factors being determined dependently on the vehicle velocity (v);
   - determining a steering angle ($\delta_M$; $\delta_{MFB}$) of steerable wheels of the motor vehicle on the basis of an arbitration of the weighted closed-loop-controller output signals; and
   - influencing a steering system of the motor vehicle (101) according to the determined steering angle ($\delta_M$; $\delta_{MFB}$).

2. Method according to Claim 1,
   **characterized in**
   **that** the closed-loop-controller output signals ($\delta_{LLM1}$; ...; $\delta_{LLMN}$) are determined dependently on a deviation (e) of a desired transverse offset ($y_R$) from a determined actual transverse offset ($y_E$) of the motor vehicle (101), said desired transverse offset being preset on the basis of the calculated swerving path.

3. Method according to Claim 1 or 2,
   **characterized in**
   **that** the closed-loop-controller output signals ($\delta_{LLM1}$; ...; $\delta_{LLMN}$) are determined dependently on a deviation of a desired transverse offset ($y_R(t+\Delta t)$) of the vehicle (101) from a current actual transverse offset ($y_E(t)$) of the vehicle (101), said desired transverse offset being preset on the basis of the calculated swerving path for a predicted position of the vehicle (101).

4. Method according to any one of the preceding claims,
   **characterized in**
   **that** the deviation (e) is an offset of the vehicle (101) that is orthogonal to a central longitudinal axis of the vehicle (101).

5. Method according to any one of the preceding claims,

**characterized in**
**that** the linear closed-loop controller modules ($501_1$ ; ...; $501_N$) are, at least partially, proportional-plus-derivative controllers.

6. Method according to any one of the preceding claims,
**characterized in**
**that** the closed-loop controller modules ($501_1$; ...; $501_N$) contain, at least partially, a proportional control unit and a derivative control unit for processing the deviation of position of the motor vehicle (101).

7. Method according to any one of the preceding claims,
**characterized in**
**that** a centre-of-gravity velocity ($c_1$ ; ...; $c_N$) is assigned to each closed-loop controller module ($501_1$ ; ...; $501_N$), and that only in a velocity interval that contains the centre-of-gravity velocity ($c_1$ ; ...; $c_N$), a weighting factor ($\Phi_1$ ; ...; $\Phi_N$) is substantially different from zero.

8. Method according to any one of the preceding claims,
**characterized in**
**that** the weighting factors ($\Phi_1$ ; ...; $\Phi_N$) have the form of

$$\Phi_i = \frac{\mu_i(v)}{\sum\limits_{j=1}^{N} \mu_j(v)} \qquad \text{with} \qquad \mu_i(v) = \exp\left(-\frac{(v-c_i)^2}{2\sigma_i^2}\right)$$

wherein $c_i$ denotes the centre-of-gravity velocity, $\sigma_i$ denotes a preset parameter, and N denotes the number of the closed-loop controller modules.

9. Method according to any one of the preceding claims,
**characterized in**
**that** a closed-loop-control proportion ($\delta_{MFB}$) of the steering angle ($\delta_M$) is determined on account of the arbitration of the weighted closed-loop-controller output signals, and that the steering angle ($\delta_M$) additionally contains an open-loop-control proportion ($\delta_{MFF}$).

10. Method according to any one of the preceding claims,
**characterized in**
**that** the open-loop-control proportion ($\delta_{MFF}$) of the steering angle ($\delta_M$) is determined on the basis of an inverse single-lane model of the motor vehicle (101).

11. Method according to any one of the preceding claims,
**characterized in**
**that** the open-loop-control proportion ($\delta_{MFF}$) of the steering angle ($\delta_M$) is given by

$$\dot{\delta}_{MFF} = i_s\left(\frac{l}{R} + EG \cdot \frac{v^2}{R}\right)$$

wherein $i_s$ is a translation factor, $l$ is a wheel base of the motor vehicle, $EG$ is a roll steer gradient of the motor vehicle, $v$ is a velocity of the motor vehicle (101), and $l/R$ is a curvature of the swerving path.

12. Computer program product,
**characterized in**
**that** it defines an algorithm that comprises a method according to any one of the preceding claims.

13. Device for steering a motor vehicle when swerving to avoid hitting an object in the vicinity of (in front of or to the side of) the motor vehicle, comprising:

- a path-planning unit (206) by means of which a swerving path for swerving can be calculated;
- a closed-loop control unit (207; 402) that contains at least two closed-loop controller modules ($501_1$ ; ...; $501_N$), wherein one closed-loop-controller output signal each ($\delta_{LLM1}$ ; ...; $\delta_{LLMN}$) can be determined in the closed-loop controller modules ($501_1$ ; ...; $501_N$) according to a deviation (e) of an actual position of the motor vehicle (101) from a desired position, said desired position being preset on the basis of the swerving path;
- a weighting unit ($502_1$ $503_1$; ...; $502_N$, $503_N$) by means of which each closed-loop-controller output signal ($\delta_{LLM1}$ ; ...; $\delta_{LLMN}$) can be weighted with one weighting factor ($\Phi_1$ ; ...; $\Phi_N$), said weighting factors being determined dependently on a vehicle velocity (v);
- an arbitration unit (504) by means of which a steering angle ($\delta_M$ ; $\delta_{MFB}$) of steerable wheels of the motor vehicle (101) can be determined on the basis of an arbitration of the weighted closed-loop-controller output signals; and
- a steering-actuator open-loop control unit (208) by means of which a steering actuator can be controlled according to the steering angle ($\delta_M$ ; $\delta_{MFB}$), wherein a steering system of the motor vehicle (101) can be influenced by means of the steering actuator.

## Revendications

1. Procédé de braquage d'un véhicule automobile lors de l'évitement d'un objet dans la zone environnante avant ou latérale du véhicule automobile, avec les étapes suivantes :

   - calcul d'une trajectoire d'évitement pour l'évitement de l'objet (104),
   - détermination respectivement d'un signal de sortie de régulateur ($\delta_{LLM1}$ ; ... ; $\delta_{LLMN}$) au prorata d'une divergence (e) entre une position effective du véhicule automobile (101) et une position de consigne prédéfinie sur la base de la trajectoire d'évitement dans au moins deux modules de régulateur linéaires ($501_1$ ; ... ; $501_N$),
   - pondération des signaux de sortie de régulateur ($\delta_{LLM1}$ ; ... ; $\delta_{LLMN}$) avec respectivement un facteur de pondération ($\Phi_1$ ; ... ; $\Phi_N$) déterminé en fonction de la vitesse du véhicule (v),
   - détermination d'un angle de braquage ($\delta_M$ ; $\delta_{MFB}$) de roues dirigeables du véhicule automobile à l'aide d'un arbitrage des signaux de sortie de régulateur pondérés et
   - intervention sur un système de braquage du véhicule automobile (101) au prorata de l'angle de braquage ($\delta_M$ ; $\delta_{MFB}$) déterminé.

2. Procédé selon la revendication 1,
   **caractérisé en ce que**
   les signaux de sortie de régulateur ($\delta_{LLM1}$ ; ... ; $\delta_{LLMN}$) sont déterminés en fonction d'une divergence (e) entre un décalage transversal de consigne ($y_R$) prédéfini à l'aide de la trajectoire d'évitement calculée et un décalage transversal effectif ($y_E$) déterminé du véhicule automobile (101).

3. Procédé selon la revendication 1 ou 2,
   **caractérisé en ce que**
   les signaux de sortie de régulateur ($\delta_{LLM1}$ ; ... ; $\delta_{LLMN}$) sont déterminés en fonction d'une divergence entre un décalage transversal de consigne ($y_R(t + \Delta t)$) prédéfini à l'aide de la trajectoire d'évitement calculée pour une position prévue du véhicule (101) et un décalage transversal effectif ($y_E(t)$) actuel du véhicule (101).

4. Procédé selon une des revendications précédentes,
   **caractérisé en ce que,**
   dans le cas de la divergence (e), il s'agit d'un décalage du véhicule (101) de façon orthogonale par rapport à un axe longitudinal médian du véhicule (101).

5. Procédé selon une des revendications précédentes,
   **caractérisé en ce que,**
   dans le cas des modules de régulateur linéaires ($501_1$ ; ... ; $501_N$), il s'agit au moins partiellement de régulateurs proportionnels-différentiels.

6. Procédé selon une des revendications précédentes,
   **caractérisé en ce que**
   les modules de régulateur ($501_1$ ; ... ; $501_N$) contiennent au moins partiellement un organe proportionnel et un organe à dérivation pour le traitement de la divergence de position du véhicule automobile (101).

7. Procédé selon une des revendications précédentes,
   **caractérisé en ce que,**
   à chaque module de régulateur ($501_1$ ; ... ; $501_N$), est affectée une vitesse au centre de gravité ($C_1$ ; ... ; $C_N$), et **en ce qu'**un facteur de pondération ($\Phi_1$ ; ... ; $\Phi_N$) n'est nettement différent de zéro que dans un intervalle de vitesse contenant la vitesse au centre de gravité ($C_1$ ; ... ; $C_N$).

8. Procédé selon une des revendications précédentes,
   **caractérisé en ce que**
   les facteurs de pondération ($\Phi_1$ ; ... ; $\Phi_N$) présentent la forme

$$\Phi_i \;=\; \frac{\mu_i(v)}{\sum_{j=I}^{N}\mu_j(v)} \qquad \text{avec} \qquad \mu_i(v) \;=\; \exp\left(-\frac{(v-c_i)^2}{2\sigma_i^2}\right)$$

où $c_i$ désigne la vitesse de centre de gravité, $\sigma_i$ un paramètre prédéfini et N le nombre de modules de régulateur.

9. Procédé selon une des revendications précédentes,
   **caractérisé en ce que,**
   du fait de l'arbitrage des signaux pondérés de sortie de régulateur, une fraction de régulation ($\delta_{MFB}$) de l'angle de braquage ($\delta_M$) est déterminée, et **en ce que** l'angle de braquage ($\delta_M$) contient en plus une fraction de commande ($\delta_{MFF}$).

10. Procédé selon une des revendications précédentes,

    **caractérisé en ce que**
    la fraction de commande ($\delta_{MFF}$) de l'angle de braquage ($\delta_M$) est déterminée à l'aide d'un modèle monovoie inversé du véhicule automobile (101).

11. Procédé selon une des revendications précédentes,
    **caractérisé en ce que,**
    la fraction de commande ($\delta_{MFF}$) de l'angle de braquage ($\delta_M$) est donnée par

$$\delta_{MFF} \;=\; i_s \left(\frac{l}{R}+EG\cdot\frac{v^2}{R}\right)$$

où $i_s$ est le facteur de réduction, $l$ un empattement du véhicule automobile, $EG$ un gradient de braquage propre du véhicule automobile, $v$ une vitesse du véhicule automobile (101) et $l/R$ une courbure de la trajectoire d'évitement.

12. Produit de programme informatique,
    **caractérisé en ce qu'il**
    définit un algorithme qui comprend un procédé selon une des revendications précédentes.

13. Procédé de braquage d'un véhicule automobile lors de l'évitement d'un objet dans la zone environnante avant ou latérale du véhicule automobile, comprenant :

    - un dispositif de planification de trajectoire (206) avec lequel une trajectoire d'évitement pour l'évitement peut être calculée,
    - un dispositif de régulation (207 ; 402) qui contient au moins deux modules de régulateurs ($501_1$ ; ... ; $501_N$), un signal de sortie de régulateur ($\delta_{LLM1}$ ; ... ; $\delta_{LLMN}$) pouvant, dans les modules de régulateurs ($501_1$ ; ... ; $501_N$), être respectivement déterminé au prorata d'une divergence (e) entre une position effective du véhicule automobile (101) et une position de consigne prédéfinie à l'aide de la trajectoire d'évitement,
- un dispositif de pondération ($502_1$, $503_1$; ...; $502_N$, $503_N$) avec lequel les signaux de sortie de régulateur ($\delta_{LLM1}$ ; ... ; $\delta_{LLMN}$) peuvent être pondérés respectivement avec un facteur de pondération ($\Phi_1$ ; ... ; $\Phi_N$) déterminé en fonction d'une vitesse du véhicule (v),
- un dispositif d'arbitrage (504) avec lequel, à l'aide d'un arbitrage des signaux de sortie de régulateur pondérés, un angle de braquage ($\delta_M$ ; $\delta_{MFB}$) de roues dirigeables du véhicule automobile (101) peut être déterminé, et
- un dispositif de commande d'actionneur de direction (208) avec lequel un actionneur de direction peut être commandé au prorata de l'angle de braquage ($\delta_M$ ; $\delta_{MFB}$), une intervention pouvant être effectuée sur un système de braquage du véhicule automobile (101) au moyen de l'actionneur de direction.

Fig. 1

Fig. 2

EP 1 926 654 B1

Fig. 3

Fig. 4

Fig. 5

Fig. 6

EP 1 926 654 B1

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3830790 A1